# EUROPEAN PATENT SPECIFICATION

(11) **EP 1 764 061 B1**
(45) Date of publication and mention of the grant of the patent: **13.04.2016**
(21) Application number: 06018990.9
(22) Date of filing: 11.09.2006
(51) Int. Cl.: A61C 8/00

(54) **Intraosseous dental implantation and method for making the same**
Zahnimplantat und Verfahren zu dessen Herstellung
Implant dentaire et méthode de fabrication de cet implant dentaire

(30) Priority: 16.09.2005 IT mi20051717
(43) Date of publication of application: 21.03.2007
(73) Proprietor: Leader Italia S.r.l., 20092 Cinisello Balsamo (MI) (IT)
(72) Inventor: Mangano, Carlo, 22015 Gravedona CO (IT)
(74) Representative: Locatelli, Massimo

(56) References cited:
- CA-A1- 2 557 049
- DE-A1- 19 530 981
- US-A- 6 077 989
- US-A1- 2001 005 797
- T. V. THAMARAISELVI ET AL: 'Biological Evaluation of Bioceramic Materials - A Review' TRENDS BIOMATER. ARTIF. ORGANS, VOL 18 (1), [Online] 01 January 2004, GUINDY CAMPUS, CHENNAI 600 025, pages 9 - 17, XP055029536 Retrieved from the Internet: <URL:http://193.51.50.30/master/Biblio D9/Thamaraiselvi-Biologial evaluation Bioceramic Materials.pdf> [retrieved on 2012-06-11]

## Description

This invention relates to a method for making intraosseous dental implantation structures with predefined surface geometry and implantation structure realized by said method.

As known, in the partial or total edentulous dental implantations of various forms realized for example in titanium are used and are inserted in the bone to replace natural dental elements lost due to illness or trauma.

Such implantations necessitate variable recovery times generally between three months in the mandible and six months in the upper jawbone so that the bone integration assuring retention in time of the implanted manufactured article takes place inside the bone.

In the modern implantology context and more specifically 'Tissue Engineering' it is known that the surface of the implantation must have a certain degree of roughness in order to favor the healing process and thus obtain a faster and better bone integration of the implantation.

In the known art, to obtain the rough surface, different methods have been proposed such as for example, the so-called 'plasma spraying', treatment with acids, sand blasting, or combinations of these last two techniques.

The above-mentioned known methods however did not allow obtaining a surface porosity such as to stimulate a satisfactory bone integration, also bringing other not negligible inconveniences. For example, in the case of plasma spraying, there is the risk of considerable release of particles of the implantation covering. In the case of sand blasting, there is the possibility of having residual particles contaminating the surface of the article with sand. Similar inconveniences make necessary laborious and costly decontamination treatments of the implantations.

It has also been proposed (for example by US 6,077,989) to form a porous covering by applying on the surface of the implantation a titanium powder mixed with a binder to then subject the piece to a high-temperature treatment during which the particles of powder are molten and remain adherent to the implantation.

But this method does not allow obtaining characteristics of satisfactory porosity for rapid and effective bone integration since during the melting the powder particles can take on random forms giving origin to surface configurations unsuited to stimulating bone integration. Furthermore, the above method can involve the presence of traces polluting substances incorporated in the surface of the implantation due for example to residues of adhesive among the grains of titanium.

US-A-2001/0005797 discloses a method for producing artificial bone implants by successively laser sintering a plurality of layers of calcium phosphate powder mixed with polymer binder. Laser sintering fuses the polymer binder, which must then be thermally removed from the implant.

US 6 077 989 A relates to porous implants made from a resorbable biomaterial, and more particularly to a resorbable biomaterial for use in joining or anchoring soft connective tissue to hard connective tissue.

CA-A-2557049 discloses a method for producing metallic or non-metallic elements (including products to be used in the medical or dental field) by depositing and melting or laser sintering of successive layers of powder material.

The object of this invention is to make available a method for making an intraosseous implantation structure allowing the formation of surfaces of the implantation which would stimulate an intense angiogenetic activity while promoting the formation of the bone in shorter times than in implantations heretofore known.

Within the framework of this object, a purpose of this invention is to realize an intraosseous implantation structure which would ensure better and more durable stability of the dental implantation integrated in the bone in the long period.

Another purpose is to realize an intraosseous implantation structure which would allow a considerable increase in the contact surface with the bone and consequently better distribution of the masticatory forces from the implantation to the bone.

The present intraosseous implantation structure also allows realizing a manufactured implantation article of customized dimensions based on the bone morphology of the individual patient.

Another purpose of this invention is to realized an intraosseous implantation structure having better mechanical stability, that is greater resistance to the masticatory load forces.

This and other purposes, which are better explained below, are achieved by using in accordance with this invention a method for making intraosseous dental implantations according to claim 1.

Again in accordance with this invention it was sought to make available a an intraosseous dental implantation structure according to claim 6.

Additional characteristics and advantages of the subject of this invention are clarified by an examination of the description of a preferred but not exclusive form of realization of this invention illustrated by way of non-limiting example applying said principles. In the drawings:
FIG 1 shows a cross-sectioned elevation view of the intraosseous dental implantation structure in accordance with this invention,
FIG 2 shows a cross section view in accordance with plane of cut II-II of FIG 1,
FIG 3 shows an elevation view of the intraosseous dental implantation structure in accordance with this invention, and
FIG 4 shows diagrammatically the manufacturing process of the implantation in accordance with this invention.

With particular reference to the numerical symbols of the above figures, the intraosseous implantation structure in accordance with this invention designated as a whole by reference number 1 includes a 'biomimetic' surface which has a particular geometrical conformation consisting of cavities having osteogenetic effect and designated as a whole by reference number 2.

The cavities 2 have a definite characteristic size between 70 and 800 microns with depth variable between 10 and 100 microns.

Advantageously, the cavities 2 include micro and macro cavities. The micro-cavities have dimensions between 70 and 200 microns while the macro-cavities are between 200 and 800 microns.

These cavities are capable of stimulating within them an intense angiogenetic activity while concentrating the bone growth factors - including Bone Morphogenetic Proteins (BMP) - to promote bone formation faster compared with the present which takes from 4 to 6 months.

In addition, these cavities, once the bone has grown inside them, ensure better and longer stability over the long period to the dental implantation integrated in the bone. As a result from the biomechanical viewpoint there is a considerable increase in the contact surface with the bone and consequently better distribution of the masticatory forces between the implantation and the bone.

From the biological viewpoint the cavities are decisive in promoting the formation of the bone faster than now.

The implantation structure in accordance with this invention and especially the associated manufacturing method as explained below also allow realizing a custom-made implantation manufactured article for the patient starting from the performance of a TAC and its graphic refashioning and obtaining the three-dimensional model of the maxillaries.

The implantation can be realized in a single piece fitted with the stump (not shown in the figure) already pre-angled to correct any disparallelisms between multiple implantations and/or natural dental elements.

In cases where it is wished to proceed to immediate loading of the implantation after its insertion in the bone, on the manufactured article implanting in a single piece and with customized dimensions based on the bone morphology of the individual patient, a ceramic false set of teeth can be constructed in ceramic, resin or metal and ceramic (not shown in the figure).

Obtaining the two above characteristics, implantation and stump in a single customized piece and preconstructed false set of teeth, can take place by using an innovative manufacturing method calling for realization of both the dental implantation and the false set of teeth by sintering of titanium powders using a laser beam. It is understood that the manufacturing method can also be used for formation of the implantation without stump or preconstructed prosthesis.

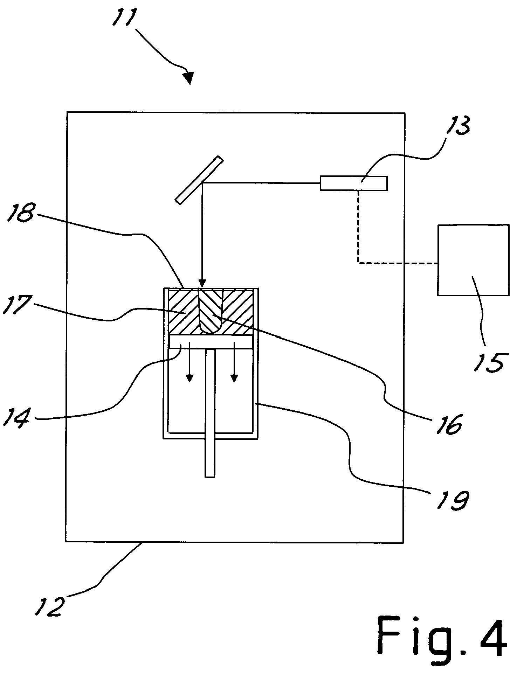

As shown diagrammatically in FIG 4 the implantation 1 can be realized using a productive unit 11 including a controlled-atmosphere chamber 12 in which the article is formed.

The titanium powder is deposited in layers (FIG 4 shows the just deposited last layer 18) on a vertically movable platform 14 along a cylinder 19. Each time a layer of titanium powder is deposited a laser device 13 generates a sintering laser beam directed towards the layer of titanium powder just deposited so as to form a layer of the implantation. Grains of titanium powder struck by the laser melt and immediately afterward solidify again to form part of the implantation. The platform 14 is moved downward by known movement means not shown in the figure as the article is formed.

The laser beam is controlled so as to form the cavities 2 having osteogenetic effect on the outer surface of the implantation. The laser device 13 is controlled for this purpose by known control means 15 which can include a PC, where a three-dimensional model of the implantation which it is desired to realize is memorized and an appropriate controller capable of piloting the laser device 13 as a function of the data supplied by the PC on the model of the article.

FIG 4 shows part of the implantation during realization with reference 16 while 17 designates the titanium powder which is not molten by the laser and which can be recovered for a subsequent manufacturing process.

The layers deposited can have advantageously a thickness between 1 and 100 microns. The titanium powder used in the process is advantageously pure titanium powder or grade 2, 4 medical titanium powder.

The grains of titanium powder can have nanometric dimensions. Preferably as shown in FIG 4 the layers of titanium powder to be sintered are deposited in accordance with planes perpendicular to the extension of the implantation which has a generally elongated cylindrical or conical form. During the manufacturing process advantageously in the chamber 12 there is an inert gas (for example argon) so as to reduced to the minimum the chance that impurities might adhere to the surface of the implantation.

It was surprisingly found that the use of laser sintering in the manufacturing process allows obtaining a surface porosity of the implantation with exceptionally good osteointegration properties and quite drastic reduction in the time necessary for healing.

In addition, the manufacturing method in accordance with this invention allows obtaining a nearly decontaminated product directly.

Indeed, when using known manufacturing techniques, the implantations have to then be subjected to costly and laborious decontamination processes aimed at cleaning the article of sandblasting residues, mechanical processing oils or other impurities as necessary.

By realizing the implantation using a sintering beam in controlled atmosphere the surface of the article already has a high level of cleanliness. The product, at the most, can be subjected to a mere ultrasound treatment with distilled water or organic acids.

Connection between the stump and the implantation where construction of the two parts is planned, separate stump and implantation, it is preferably of the pure conical type. Fastening of the stump (not shown) to the bone screw 1 is obtained by insertion of a shank thereof conformed in accordance with a Morse cone inside an axial cavity 4 with a corresponding conformation realized inside the bone screw. This cavity 4 has a troncoconical conformation with tapering toward the tip, or cylindrical.

In this cavity the shank of the stump can by coupled by pressure for anchoring of the prosthesis. The stump, however, could also be applied by screwing to the implantation.

The cavity 4 is characterized by having a hexagonal shape on the apical bottom 3 where the most spinal part and with the same shape as the stump is engaged. The shape of the bottom of the cavity 4 could however be triangular, square or octagonal.

A variant of the bottom form of the cavity 4 of the implantation is to adopt a 5 or 6-point star design where the shank of the interchangeable stump of analogous form fits.

The conical connection allows better mechanical stability, that is a better resistance to masticatory load forces. This connection also allows better biological stability and prevents passage of fluids and bacteria towards the inner parts of the implantation.

In addition, the end hexagon or the 5 or 6-point star ensure correct positioning of the stump by also opposing rotational forces.

To allow screwing or positioning of the implantation in the bone, the driver, which bears the implantation, is advantageously provided with an interfaceable hexagon or 6-point star portion which fits into the most apical part of the inner cavity of the hex-shaped implantation thus making possible application of the necessary force for positioning of the implantation in the bone.

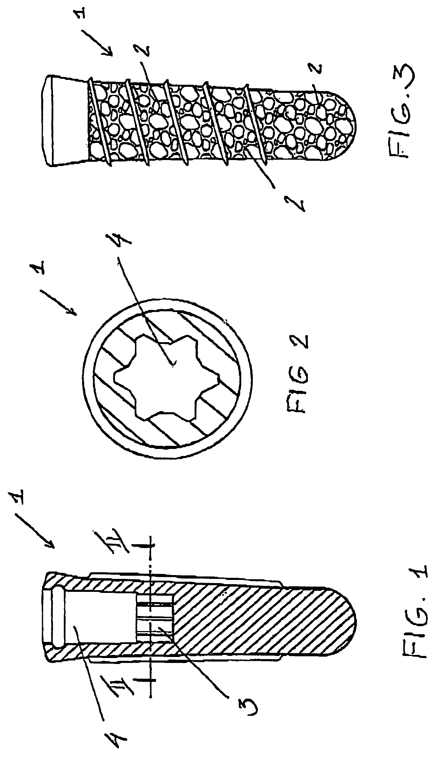

As shown in FIGS 1 and 3, on the outer side surface of the implantation 1 a fraenum is formed which might involve about two-thirds of the length of the implantation.

The third apical of the implantation can be solid and its outer surface has the cavities with diameter of 70 to 800 microns. With the new sintering procedure it is possible to construct this part so that all the cavities are interconnected by micropores to constitute a network of intercommunicating cavities and pores allowing colonization by the bone.

The surface of the coronal top two-thirds of the implantation has micro cavities with diameter of 70 to 200 microns.

The top edge at the neck level of the implantation is beveled and smooth with an angulation between 0° and 40°. It is noted that the interconnection micropores between the cavities could be formed at any point of the implantation 1 where there are cavities 2.

It is now clear that the preset purposes have been achieved. An intraosseous implantation structure characterized by having a surface with micro and macro cavities of definite sizes which induce formation of the bone is realized. It is this geometric drawing of the surface which produces the osteogenetic effect.

The manufacturing method in accordance with this invention allows realizing a surface porosity provided with micro-cavities and macro-cavities such as to lead to surprising and unexpected results form the osteointegration viewpoint. In addition, thanks to the method in accordance with this invention it is possible to exclude from the manufacturing process the laborious and costly decontamination treatments to which the implantations realized using known techniques had to be subjected.

Naturally the above description of an embodiment applying the innovative principles of this invention is given by way of non-limiting example of said principles within the scope of the exclusive right claimed here.

The intraosseous implantation structure in accordance with this invention can be realized to measure in a single piece with form, size and preangulations of the stump so as to allow customized adaptation to the requirements of the osseous formation of the individual patient.

The structure is also characterized by a conical joint connection between the stump and the implantation.

## Claims

1. Method for making intraosseous dental implantations including the steps of supplying a layer of powder material intended to form the implantation and applying a sintering laser beam to said powder material to form a layer of the implantation and repeating several times the two above operations by depositing each time a further layer of powder material over the preceding layer already treated with the laser beam to form the implantation, **characterized in that** the used powder material is titanium powder and **in that** the laser beam is applied to the titanium powder layers so as to form cavities on a surface of the implantation, which are designed to be colonized by the patient's bone, said cavities consisting of a network of micro-cavities with characteristic dimension between 70 and 200 microns and macro-cavities with dimension between 200 and 800 microns, interconnected by micropores.

2. Method in accordance with claim 1, **characterized in that** deposit of the layers of titanium powder and application of the sintering laser is done in an inert gas atmosphere.

3. Method in accordance with claim 1, **characterized in that** the layers of titanium powder deposited from time to time have a thickness between 1 and 100 microns.

4. Method in accordance with claim 1, **characterized in that** the implantation has a generally elongated cylindrical form, with the layers of titanium powder being deposited in accordance with planes nearly perpendicular to an axis of the implantation.

5. Method in accordance with claim 1, **characterized in that** the laser beam is controlled by control means designed to memorize a three-dimensional model of the implantation and to guide the laser beam so as to realize said model.

6. Intraosseous dental implantation structure with predefined geometry, having a surface with cavities designed to be colonized by the patient's bone to get an osteogenetic effect, **characterized in that** the implantation structure is realized by laser sintering of successive layers of titanium powder and **in that** said cavities consist of a network of micro-cavities with characteristic dimension between 70 and 200 microns and macro-cavities with dimension between 200 and 800 microns, interconnected by micropores.

7. Intraosseous dental implantation structure in accordance with claim 6, **characterized in that** it is realized in a single piece and is provided also with stump already pre-angled to correct any disparallelisms between several implantations and/or natural dental elements.

8. Intraosseous dental implantation structure in accordance with claim 6, **characterized in that** it includes a preconstructed ceramic, resin or metal-ceramic prosthesis.

9. Intraosseous dental implantation structure in accordance with claim 6, **characterized in that** the connection between the stump and the implantation, where construction of the two parts - stump and implantation - is provided in a separated manner, is of pure conical or screwing type.

10. Intraosseous dental implantation structure in accordance with claim 9, **characterized in that** the fastening of the stump to the endo-osseous screw is obtained by insertion of a shank formed in accordance with a Morse cone within an axial cavity (4) with a corresponding conformation which is realized within the endo-osseous screw.

11. Intraosseous dental implantation structure in accordance with claim 10, **characterized in that** said axial cavity (4) has on the apical bottom a hexagonal portion where the more spinal part having the same form as the stump is engaged.

12. Intraosseous dental implantation structure in accordance with claim 10, **characterized in that** the form of the bottom of the axial cavity (4) of the implantation has a 5 or 6-point star shape where the shank of the interchangeable stump of analogous form fits.

13. Intraosseous dental implantation structure in accordance with claim 6, **characterized in that** the apical third of the implantation is solid and the outer surface has the cavities with a dimension between 70 and 800 microns.

14. Intraosseous dental implantation structure in accordance with claim 6, **characterized in that** the upper edge at the level of the neck of the implantation is beveled and smooth with an angulation between 0° and 40°.

15. Intraosseous dental implantation structure in accordance with claim 6, **characterized in that** the surface of the coronal upper two-thirds of the implantation has micro-cavities with a dimension between 70 and 200 microns.

## Patentansprüche

1. Verfahren zur Herstellung enossaler Zahnimplantate, umfassend die Schritte zum Bereitstellen einer Schicht des das Implantat bildenden Pulvermaterials und Aufbringen einer Sinterlaserstrahlung auf das Pulvermaterial, um eine Schicht des Implantats zu bilden, und mehrmaliges Wiederholen der beiden zuvor genannten Vorgänge, wobei jedes Mal eine weitere Schicht des Pulvermaterials über die vorhergehende, bereits laserbehandelte Schicht aufgetragen wird, um das Implantat zu bilden, **dadurch gekennzeichnet, dass** das verwendete Pulvermaterial Titanpulver ist und dass der Laserstrahl auf die Titanpulverschichten aufgebracht wird, um Hohlräume auf einer Fläche des Implantats zu bilden, die dazu bestimmt sind, durch die Knochenzellen des Patienten besiedelt zu werden, wobei die Hohlräume aus einem Netzwerk von Mikrokavitäten mit einer charakteristischen Größe von 70 bis 200 Mikrometer und Makrokavitäten mit einer Größe von 200 bis 800 Mikrometer bestehen, die durch Mikroporen miteinander verbunden sind.

2. Verfahren nach Anspruch 1, **dadurch gekennzeichnet, dass** das Aufbringen der Titanpulverschicht und das Lasersintern in einer Inertgasatmosphäre vorgenommen werden.

3. Verfahren nach Anspruch 1, **dadurch gekennzeichnet, dass** die mehrfach aufgetragenen Titanpulverschichten eine Dicke von 1 bis 100 Mikrometer aufweisen.

4. Verfahren nach Anspruch 1, **dadurch gekennzeichnet, dass** das Implantat im Allgemeinen eine längliche Zylinderform aufweist, wobei die Titanpulverschichten entsprechend nahezu senkrecht zu einer Implantatachse stehenden Ebenen aufgetragen werden.

5. Verfahren nach Anspruch 1, **dadurch gekennzeichnet, dass** der Laserstrahl mit Steuermitteln gesteuert wird, die dazu bestimmt sind, ein dreidimensionales Modell des Implantats zu speichern und den Laserstrahl entsprechend zu führen, um das Modell zu erstellen.

6. Enossale Zahnimplantatstruktur mit vordefinierter Geometrie, die eine Oberfläche mit Hohlräumen aufweist, die dazu bestimmt sind, durch die Knochenzellen des Patienten besiedelt zu werden, um eine osteogenetische Wirkung zu erzielen, **dadurch gekennzeichnet, dass** die Implantatstruktur durch Lasersintern von aufeinanderfolgenden Titanpulverschichten hergestellt wird, und dass die Hohlräume aus einem Netzwerk von Mikrokavitäten mit einer charakteristischen Größe von 70 bis 200 Mikrometer und Makrokavitäten mit einer Größe von 200 bis 800 Mikrometer bestehen, die durch Mikroporen miteinander verbunden sind.

7. Enossale Zahnimplantatstruktur nach Anspruch 6, **dadurch gekennzeichnet, dass** sie einstückig hergestellt wird und ferner mit einem Stumpf versehen ist, der bereits vorabgewinkelt ist, um jegliche Parallelitätsabweichungen zwischen mehreren Implantaten und/oder den natürlichen Zähnen korrigieren zu können.

8. Enossale Zahnimplantatstruktur nach Anspruch 6, **dadurch gekennzeichnet, dass** sie einen vorgefertigten Zahnersatz aus Keramik, Harz oder Metallkeramik umfasst.

9. Enossale Zahnimplantatstruktur nach Anspruch 6, **dadurch gekennzeichnet, dass** die Verbindung zwischen dem Stumpf und dem Implantat, sofern die Anfertigung der beiden Teile - Stumpf und Implantat - separat vorgenommen wird, ausschließlich vom konischen Typ oder vom Schraubentyp ist.

10. Enossale Zahnimplantatstruktur nach Anspruch 9, **dadurch gekennzeichnet, dass** die Befestigung des Stumpfes an der intraossären Schraube durch Einsetzen eines gemäß einem Morse-Kegel ausgebildeten Schaftes in eine axiale Kavität (4) mit entsprechender Ausformung erzielt wird, die innerhalb der intraossären Schraube realisiert ist.

11. Enossale Zahnimplantatstruktur nach Anspruch 10, **dadurch gekennzeichnet, dass** die axiale Kavität (4) auf dem apikalen Boden einen Sechskantanteil aufweist, wobei der weitere spinale Teil eingreift, der dieselbe Form wie der Stumpf aufweist.

12. Enossale Zahnimplantatstruktur nach Anspruch 10, **dadurch gekennzeichnet, dass** die Form des Bodens der axialen Kavität (4) des Implantats die Gestalt eines 5- oder 6-zackigen Sterns aufweist, wobei der Schaft des austauschbaren Stumpfes mit ähnlicher Form anliegt.

13. Enossale Zahnimplantatstruktur nach Anspruch 6, **dadurch gekennzeichnet, dass** das apikale Drittel des Implantats massiv ist und die Außenfläche Kavitäten mit einer Größe von 70 bis 800 Mikrometer aufweist.

14. Enossale Zahnimplantatstruktur nach Anspruch 6, **dadurch gekennzeichnet, dass** der obere Rand auf der Höhe des Implantathalses angefast und glatt ist sowie eine Winkelung von 0° bis 40° aufweist.

15. Enossale Zahnimplantatstruktur nach Anspruch 6, **dadurch gekennzeichnet, dass** die Oberfläche der oberen koronalen zwei Drittel des Implantats Mikrokavitäten mit einer Größe von 70 bis 200 Mikrometer aufweist.

## Revendications

1. Procédé de fabrication d'implants dentaires intra-osseux comprenant les étapes de fourniture d'une couche de matériau en poudre destiné à former l'implant et d'application d'un faisceau laser de frittage audit matériau en poudre pour former une couche de l'implant et de répétition plusieurs fois des deux opérations ci-dessus en déposant à chaque fois une autre couche de matériau en poudre sur la couche précédente déjà traitée avec le faisceau laser pour former l'implant, **caractérisé en ce que** le matériau en poudre utilisé est de la poudre de titane et **en ce que** le faisceau laser est appliqué aux couches de poudre de titane de manière à former des cavités sur une surface de l'implant, lesquelles sont conçues pour être colonisées par l'os du patient, lesdites cavités comprenant un réseau de microcavités avec une dimension caractéristique entre 70 et 200 microns et des macro-cavités avec une dimension entre 200 et 800 microns, interconnectées par des micropores.

2. Procédé selon la revendication 1, **caractérisé en ce que** le dépôt des couches de poudre de titane et l'application du laser de frittage sont effectués dans une atmosphère de gaz inerte.

3. Procédé selon la revendication 1, **caractérisé en ce que** les couches de poudre de titane déposées à chaque fois ont une épaisseur entre 1 et 100 microns.

4. Procédé selon la revendication 1, **caractérisé en ce que** l'implant à une forme cylindrique généralement allongée, avec les couches de poudre de titane qui sont déposées conformément à des plans presque perpendiculaires à un axe de l'implant.

5. Procédé selon la revendication 1, **caractérisé en ce que** le faisceau laser est commandé par des moyens de commande conçus pour mémoriser un modèle tridimensionnel de l'implant et pour guider le faisceau laser de manière à réaliser ledit modèle.

6. Structure d'implant dentaire intra-osseux avec une géométrie prédéfinie, ayant une surface avec des cavités conçues pour être colonisées par l'os du patient pour obtenir un effet ostéogénétique, **caractérisée en ce que** la structure d'implant est réalisée par frittage laser de couches successives de poudre de titane et **en ce que** lesdites cavités comprennent un réseau de microcavités avec une dimension caractéristique entre 70 et 200 microns et des macro-cavités avec une dimension entre 200 et 800 microns, interconnectées par des micropores.

7. Structure d'implant dentaire intra-osseux selon la revendication 6, **caractérisée en ce qu'**elle est réalisée d'une seule pièce et est également pourvue d'une souche déjà préformée angulairement pour corriger n'importe quels défauts de parallélisme entre plusieurs implants et/ou des éléments dentaires naturels.

8. Structure d'implant dentaire intra-osseux selon la revendication 6, **caractérisée en ce qu'**elle comprend une prothèse préconstruite en céramique, résine ou métal-céramique.

9. Structure d'implant dentaire intra-osseux selon la revendication 6, **caractérisée en ce que** la connexion entre la souche et l'implant, où une construction des deux parties - souche et implant - est prévue d'une manière séparée, est de type simplement conique ou par vissage.

10. Structure d'implant dentaire intra-osseux selon la revendication 9, **caractérisée en ce que** la fixation de la souche à la vis endo-osseuse est obtenue par insertion d'une tige formée conformément à un cône Morse à l'intérieur d'une cavité axiale (4) avec une conformation correspondante qui est réalisée à l'intérieur de la vis endo-osseuse.

11. Structure d'implant dentaire intra-osseux selon la revendication 10, **caractérisée en ce que** ladite cavité axiale (4) comporte sur le fond apical une portion hexagonale où la partie plus spinale ayant la même forme que la souche est engagée.

12. Structure d'implant dentaire intra-osseux selon la revendication 10, **caractérisée en ce que** la forme du fond de la cavité axiale (4) de l'implant a une forme d'étoile à 5 ou 6 branches où la tige de la souche interchangeable de forme analogue s'ajuste.

13. Structure d'implant dentaire intra-osseux selon la revendication 6, **caractérisée en ce que** le tiers apical de l'implant est plein et la surface extérieure comporte les cavités avec une dimensions entre 70 et 800 microns.

14. Structure d'implant dentaire intra-osseux selon la revendication 6, **caractérisée en ce que** le bord supérieur au niveau du col de l'implant est biseauté et lisse avec une angulation entre 0° et 40°.

15. Structure d'implant dentaire intra-osseux selon la revendication 6, **caractérisée en ce que** la surface des deux tiers supérieurs coronaires de l'implant comporte des microcavités avec une dimension entre 70 et 200 microns.
